(19) Europäisches Patentamt / European Patent Office / Office européen des brevets

(11) **EP 4 700 840 A1**

(12) **EUROPEAN PATENT APPLICATION**

(43) Date of publication:
**25.02.2026 Bulletin 2026/09**

(21) Application number: **25197498.6**

(22) Date of filing: **22.08.2025**

(51) International Patent Classification (IPC):
*H01M 4/13* (2010.01)   *H01M 4/131* (2010.01)
*H01M 4/62* (2006.01)   *H01M 10/42* (2006.01)
*H01M 4/02* (2006.01)

(52) Cooperative Patent Classification (CPC):
**H01M 4/62; H01M 4/13; H01M 4/131; H01M 4/624;
H01M 4/628; H01M 10/4235;** H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.08.2024 JP 2024142664
20.08.2025 KR 20250116059**

(71) Applicant: **SAMSUNG SDI CO., LTD.
Yongin-si, Gyeonggi-do 17084 (KR)**

(72) Inventors:
• **FUJITA, Takayoshi
Kanagawa-ken, 230-0027 (JP)**
• **BAEK, Jinseok
Kanagawa-ken, 230-0027 (JP)**

(74) Representative: **Michalski Hüttermann & Partner
Patentanwälte mbB
Kaistraße 16A
40221 Düsseldorf (DE)**

(54) **POSITIVE ELECTRODE FOR NON-AQUEOUS ELECTROLYTE RECHARGEABLE BATTERY, AND NON-AQUEOUS ELECTROLYTE RECHARGEABLE BATTERY**

(57) The present disclosure improves a short-circuit reduction or suppression effect of a non-aqueous electrolyte rechargeable battery more effectively by reducing or suppressing exposure of a positive electrode current collector when pierced by a foreign substance such as a nail. Example embodiments include a positive electrode for a non-aqueous electrolyte rechargeable battery including a positive electrode current collector, a positive electrode mixture layer, an intermediate layer between the positive electrode current collector and the positive electrode mixture layer.

## FIG. 1

**Description**

**BACKGROUND**

**1. Field**

Example embodiments relate to a positive electrode for a non-aqueous electrolyte rechargeable battery, and to a non-aqueous electrolyte rechargeable battery including the positive electrode.

**2. Description of the Related Art**

Non-aqueous electrolyte rechargeable batteries including rechargeable lithium ion batteries are widely used as power sources for, e.g., smart phones, notebook computers, and the like, as well as for large-sized batteries such as, e.g., batteries for vehicles.

Rechargeable lithium ion batteries have advantages of high energy density, and because rechargeable lithium ion batteries use non-aqueous electrolytes, sufficient measures may be desired to be taken for safety. Also, with the increase in the size of the batteries, ensuring safety provides substantial advantages.

For example, when using a rechargeable lithium ion battery, such as driving a vehicle equipped with a rechargeable lithium ion battery, there is a risk that sharp foreign substances such as nails may fly in and pierce the battery while the battery is in use. When sharp foreign substances such as a nail pierces the battery, there is a risk that the positive and negative poles may short-circuit. In particular, when the positive electrode current collector and the positive electrode mixture layer are deformed, the positive electrode mixture layer is peeled off from the positive electrode current collector, and the exposed positive electrode current collector comes into contact with the negative electrode, there is a concern that a short circuit with relatively small resistance may occur, resulting in the generation of very large Joule heating.

Therefore, as a countermeasure against exposure of a rechargeable lithium ion battery to a foreign substance, an intermediate layer may be installed that can reduce or suppress exposure of the positive electrode collector even when the positive electrode mixture layer is peeled off from the positive electrode collector due to deformation. Examples of such an intermediate layer include one that is installed between the positive electrode current collector and the positive electrode active material layer, as described in Japanese Patent Publication No. 2020-87647, and includes particles made of a metal oxide and low Young's modulus particles made of a solid electrolyte material or a resin material.

**SUMMARY**

However, there is room for further improvement in the short-circuit reduction or suppression effect by the conventional intermediate layer described above.

The present disclosure aims to improve the short-circuit reduction or suppression effect of a non-aqueous electrolyte rechargeable battery more effectively by studying the composition of the intermediate layer and the shape of particles forming the intermediate layer, thereby reducing or suppressing exposure of a positive electrode current collector when pierced by a foreign substance such as, e.g., a nail, more effectively.

That is, the present disclosure includes the following configurations.

[1] A positive electrode for a non-aqueous electrolyte rechargeable battery, including a positive electrode current collector, a positive electrode mixture layer, and an intermediate layer between the positive electrode current collector and the positive electrode mixture layer, wherein the intermediate layer includes first particles and second particles, the first particles include boron nitride and has insulating properties, the second particles include at least one of a metal hydroxide and a metal oxide and a flame retardant component, a ratio (major axis/minor axis) of a major axis to a minor axis of the first particle is greater than or equal to about 3.0 and less than or equal to about 30, a cumulative value 50% of the particle size distribution based on a volume of the first particles is greater than or equal to about 0.01 $\mu$m and less than or equal to about 8 $\mu$m, and a cumulative value 50% of the particle size distribution based on a volume of the second particles is greater than or equal to about 0.01 $\mu$m and less than or equal to about 8 $\mu$m,

[2] The positive electrode for a non-aqueous electrolyte rechargeable battery as described in [1], wherein the first particles are made of or include boron nitride.

[3] The positive electrode for a non-aqueous electrolyte rechargeable battery as described in [1] or [2], wherein an amount of $P_2$ (MS1) desorbed from the second particles from $\geq 80\,°C$ to $\leq 1400\,°C$ as determined by thermal desorption gas mass spectrometry (TDS-MS) may be greater than or equal to about $200 \times 10^{-6}$ mol/g and less than or equal to about $2500 \times 10^{-6}$ mol/g, an amount of $H_2O$ (MS2) desorbed from the second particles from $\geq 80\,°C$ to $\leq 200\,°C$ determined by TDS-MS may be greater than or equal to about $50 \times 10^{-6}$ mol/g and less than or equal to about

$1000 \times 10^{-6}$ mol/g, and a ratio (MS1/MS2) of an amount of desorbed $P_2$ to an amount of desorbed $H_2O$ may satisfy Formula (1) below.

$$0.5 \leq (MS1/MS2) \leq 10 \ldots \qquad \text{Formula (1).}$$

[4] The positive electrode for a non-aqueous electrolyte rechargeable battery as described in any one of [1] to [3], wherein in the second particles, a surface or interior of at least one of the metal hydroxide and the metal oxide may be modified with a flame retardant.

[5] The positive electrode for a non-aqueous electrolyte rechargeable battery as described in any one of [1] to [4], wherein the metal hydroxide may include at least one of kaolinite, pseudo-boehmite, boehmite, and aluminum hydroxide.

[6] The positive electrode for a non-aqueous electrolyte rechargeable battery as described in any one of [1] to [5], wherein the metal oxide may be or include activated alumina.

[7] The positive electrode for a non-aqueous electrolyte rechargeable battery as described in [4], wherein the flame retardant may include at least one of phosphoric acid, phosphoric acid ester, phosphonic acid, phosphonic acid ester, phosphinic acid, and phosphinic acid ester.

[8] The positive electrode for a non-aqueous electrolyte rechargeable battery as described in any one of [1] to [7], wherein a thickness of the intermediate layer may be greater than or equal to about 0.1 $\mu$m and less than or equal to about 10 $\mu$m.

[9] The positive electrode for a non-aqueous electrolyte rechargeable battery as described in any one of [1] to [8], wherein the intermediate layer may further include a conductive agent.

[10] The positive electrode for a non-aqueous electrolyte rechargeable battery as described in [9], wherein the conductive agent may be at least one of carbon nanofibers and carbon black.

[11] A non-aqueous electrolyte rechargeable battery including a positive electrode, a negative electrode, a separator, and a non-aqueous electrolyte solution, wherein the positive electrode is a positive electrode for a non-aqueous electrolyte rechargeable battery as described in any one of [1] to [10].

According to the present disclosure, the first particles include boron nitride, and the aspect ratio (major axis/minor axis) of the first particles are set to be greater than or equal to about 3.0 and less than or equal to about 30, and thereby the intermediate layer including the first particles may be substantially deformed along the surface shape of a positive electrode current collector when pierced by a foreign substance such as a nail, and exposure of the positive electrode current collector may be reduced or suppressed.

The boron nitride may capture active oxygen, thereby reducing or suppressing decomposition reaction of an electrolyte solution and thus reducing or suppressing temperature rise of the battery.

Because the intermediate layer further includes second particles including at least one of a metal hydroxide and a metal oxide and a flame retardant component, the temperature rise of the battery can be further reduced or suppressed, and safety can be substantially improved by the effect of reducing or suppressing the endothermic reaction of the electrolyte solution by the metal hydroxide or the metal oxide and decomposition reaction by radical capture by the flame retardant component.

## BRIEF DESCRIPTION OF THE DRAWINGS

FIG. 1 is a schematic view showing the overall structure of a non-aqueous electrolyte rechargeable battery according to some example embodiments.

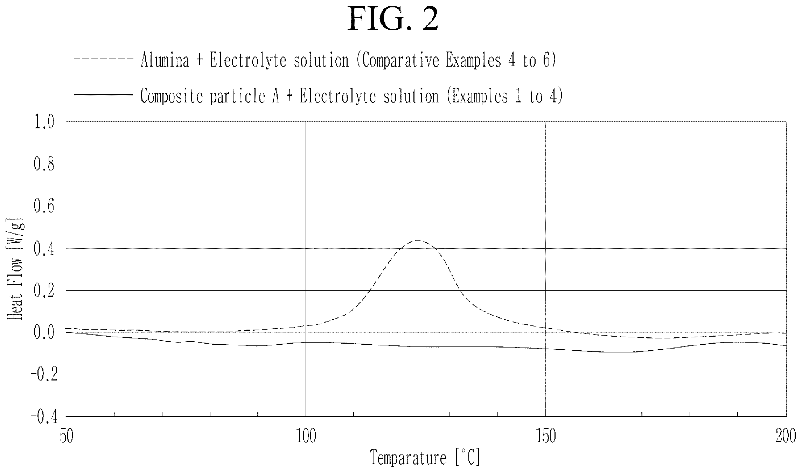

FIG. 2 is a view showing the results of confirming the presence or absence of exothermic peak at a temperature of 150 °C or lower in the coexistence of an electrolyte solution in Examples and Comparative Examples of the present disclosure.

## DETAILED DESCRIPTION

Hereinafter, example embodiments are described in detail so that those of ordinary skill in the art can readily implement the example embodiments. However, this disclosure may be embodied in many different forms and is not construed as limited to the example embodiments set forth herein. The terminology used herein is used to describe example embodiments, and is not intended to limit the present disclosure.

The singular expression includes the plural expression unless the context clearly dictates otherwise. As used herein, "combination thereof" indicates a mixture, laminate, composite, copolymer, alloy, blend, reaction product, and the like of the constituents. Herein, it should be understood that terms such as "comprises," "includes," or "have" are intended to designate the presence of an embodied feature, number, step, element, or a combination thereof, but does not preclude the possibility of the presence or addition of one or more other features, number, step, element, or a combination thereof.

In the drawings, the thickness of layers, films, panels, regions, and the like, are exaggerated for clarity and like reference numerals designate like elements throughout the specification. It is understood that when an element such as a layer, film, region, or substrate is referred to as being "on" another element, the element can be directly on the other element, or intervening elements may also be present therebetween. In contrast, when an element is referred to as being "directly on" another element, there are no intervening elements present. In addition, "layer" herein includes not only a shape formed on the whole surface when viewed from a plan view, but also a shape formed on a partial surface.

In addition, the particle diameter may be an average particle diameter, and may be measured by a method known to those skilled in the art, for example, a particle size analyzer, or e.g., a transmission electron microscopic image or a scanning electron microscopic image. Alternatively, it is possible to obtain an average particle diameter value by using a dynamic light scattering method, performing data analysis, counting the number of particles for each particle size range, and calculating the average particle diameter from the counted particles. Unless otherwise defined, the average particle diameter may indicate the diameter ($D_{50}$) of particles having a cumulative volume of 50 volume% in the particle size distribution. As used herein, when a definition is not otherwise provided, the average particle diameter indicates a diameter ($D_{50}$) of particles having a cumulative volume of 50 volume% in the particle size distribution that is obtained by measuring the size (diameter or length of the long axis) of about 20 particles at random in a scanning electron microscope image.

Herein, "or" is not to be construed as an exclusive meaning, for example, "A or B" is construed to include A, B, A+B, and the like. "Metal" is interpreted as a concept including ordinary metals, transition metals and metalloids (semi-metals). When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%. Hereinafter, a configuration of a non-aqueous electrolyte rechargeable battery according to some example embodiments is described.

1. Basic Configuration of Non-aqueous Electrolyte Rechargeable Battery

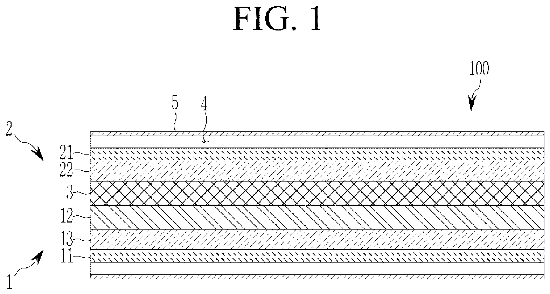

FIG. 1 is a cross-sectional schematic view showing a cross section of the non-aqueous electrolyte rechargeable battery 100. As shown in FIG. 1, the non-aqueous electrolyte rechargeable battery 100 according to an example embodiment is a rechargeable lithium ion battery including a positive electrode 1, a negative electrode 2, a separator 3 therebetween, a non-aqueous electrolyte solution 4, and a container 5 that accommodates the above features therein.

The shape of the non-aqueous electrolyte rechargeable battery 100 may be, for example, cylindrical, square, laminate, or button.

1-1. Positive Electrode

In various examples, the positive electrode 1 includes a positive electrode current collector 11 and a positive electrode mixture layer 12 on the positive electrode current collector 11.

The positive electrode current collector 11 may be or include any material as long as the material is a conductor, and is, for example, plate-shaped or thin, and may be made of or include at least one of aluminum, stainless steel, nickel coated steel, and the like.

The positive electrode mixture layer 12 may include at least a positive electrode active material, and may further include a conductive agent and a positive electrode binder.

The positive electrode active material may be or include, for example, a transition metal oxide or a solid solution oxide including lithium, as long as the positive electrode active material is or includes a material that can electrochemically intercalate and deintercalate lithium ions. The shape of the positive electrode active material may be in the form of, e.g., particles. Examples of the transition metal oxide including lithium may include $Li_{1.0}Ni_{0.88}Co_{0.1}Al_{0.01}Mg_{0.01}O_2$, and the like. In addition, the transition metal oxide including lithium may also include Li·Co composite oxides such as, e.g., $LiCoO_2$, Li·Ni·Co·Mn-based composite oxides such as, e.g., $LiNi_xCo_yMn_zO_2$, Li-Ni-based composite oxide such as, e.g., $LiNiO_2$, or Li-Mn-based composite oxides such as, e.g., $LiMn_2O_4$, and the like. Examples of the solid solution oxide may include at least $Li_aMn_xCo_yNi_zO_2$ ($1.150 \leq a \leq 1.430$, $0.45 \leq x \leq 0.6$, $0.10 \leq y \leq 0.15$, $0.20 \leq z \leq 0.28$), or $LiMn_{1.5}Ni_{0.5}O_4$. A content (content ratio) of the positive electrode active material is not particularly limited, as long as the content or content ratio is applicable to the positive electrode mixture layer 12 of the non-aqueous electrolyte rechargeable battery 100. Moreover, these compounds may be used alone, or may be used in various mixtures.

A material of the conductive agent is not particularly limited as long as the conductive agent increases the conductivity of the positive electrode 1. Examples of the conductive agent may include at least one of, e.g., carbon black, natural graphite, artificial graphite, fibrous carbon, and sheet-like carbon. Examples of the carbon black may include, e.g.,

furnace black, channel black, thermal black, Ketjen black, and acetylene black.

Examples of the fibrous carbon may include carbon nanotubes and carbon nanofibers, and examples of the sheet-like carbon include graphene and the like.

A content of the conductive agent in the positive electrode mixture layer 12 may be, e.g., greater than or equal to about 0.1 wt% and less than or equal to about 5 wt%, or greater than or equal to about 0.5 wt% and less than or equal to about 3 wt% based on the total amount of the positive electrode mixture layer 12, in order to achieve both conductivity and battery capacity.

The positive electrode binder may include, for example, a fluoro-containing resin such as, e.g., polyvinylidene fluoride, an ethylene-containing resin such as, e.g., at least one of styrene-butadiene rubber, an ethylenepropylene diene terpolymer, an acrylonitrile-butadiene rubber, a fluoro rubber, polyvinyl acetate, polymethylmethacrylate, polyethylene, polyvinyl alcohol, carboxymethyl cellulose, a carboxymethyl cellulose derivative (a salt of carboxymethyl cellulose, and the like), nitrocellulose, and the like. The positive electrode binder may be or include any material capable of binding the positive electrode active material and the conductive agent onto the positive electrode current collector 11.

1-2. Negative Electrode

In various examples, the negative electrode 2 includes a negative electrode current collector 21, and a negative electrode mixture layer 22 on the negative electrode current collector 21. The negative electrode current collector 21 may be any conductor material, and may be plate-shaped or thin, and made of or include at least one of copper, stainless steel, nickel-plated steel, or the like.

The negative electrode mixture layer 22 may include a negative electrode active material, and may further include a conductive agent and a negative electrode binder.

The negative electrode active material is configured to electrochemically intercalate and deintercalate lithium ions, and may be or include at least one of, for example, a graphite active material (artificial graphite, natural graphite, a mixture of artificial graphite and natural graphite, natural graphite coated with artificial graphite), a Si-based active material, or a Sn-based active material (e.g., a mixture of fine particles of silicon (Si) or tin (Sn) or oxides thereof and a graphite active material, particulates of silicon or tin, an alloy including silicon or tin as a base material), metallic lithium, a titanium oxide compound such as $Li_4Ti_5O_{12}$, lithium nitride, and the like. As the negative electrode active material, one of the above examples may be used, or two or more of the above examples may be used in combination. For example, oxides of silicon may be represented by $SiO_x$ ($0 < x \leq 2$).

A material of the conductive agent is configured to increase the conductivity of the negative electrode 2, and may be or include for example, the same conductive agent as described in section 1-1 above.

A content of the conductive agent in the negative electrode mixture layer 22 may be greater than or equal to about 0.1 wt% and less than or equal to about 5 wt%, or greater than or equal to about 0.5 wt% and less than or equal to about 3 wt%, based on the total weight of the negative electrode mixture layer 22, in order to achieve both conductivity and battery capacity.

The negative electrode binder may be capable of binding the negative electrode active material and the conductive agent on the negative electrode current collector 21. The negative electrode binder may be or include, for example, at least one of polyvinylidene fluoride (PVDF), polytetrafluoroethylene (PTFE), polyacrylic acid (PAA), a styrene-butadiene-based copolymer (SBR), a metal salt of carboxymethyl cellulose (CMC), and the like. The binder may be used alone, or may be used in mixture of two or more binders.

1-3. Separator

The separator 3 may be or include, e.g., any separator that can be used in a rechargeable lithium ion battery. The separator 3 may be or include a porous film, a nonwoven fabric, or the like, that exhibits a desired, improved or advantageous high-rate discharge performance alone or in combination. The resin constituting or included in the separator 3 may be or include, for example, a polyolefin-based resin such as polyethylene, polypropylene, and the like, a polyester resin such as polyethylene terephthalate, polybutylene terephthalate, and the like, polyvinylidene difluoride, a vinylidene difluoride-hexafluoropropylene copolymer, a vinylidene difluoride-perfluorovinyl ether copolymer, a vinylidene difluoride-tetrafluoroethylene copolymer, a vinylidene difluoride-trifluoroethylene copolymer, a vinylidene difluoride-hexafluoroacetone copolymer, a vinylidene difluoride-ethylene copolymer, a vinylidene difluoride-propylene copolymer, a vinylidene difluoride-trifluoro propylene copolymer, a vinylidene difluoride-tetrafluoroethylene copolymer, a vinylidene difluoride-ethylene-tetrafluoroethylene copolymer, or the like. A porosity of the separator 3 may be, e.g., the porosity of the separator of a conventional rechargeable lithium ion battery.

The separator 3 may further include a surface layer covering the surface of the porous film or non-woven fabric described above. The surface layer may include an adhesive for immobilizing the battery element by adhering to the electrode. Examples of the adhesive may include, e.g., at least one of a vinylidene fluoride-hexafluoropropylene copolymer, an acid-modified product of vinylidene fluoride polymers, and a styrene-(meth)acrylic acid ester copolymer.

1-4. Non-aqueous Electrolyte

As the non-aqueous electrolyte 4, the same non-aqueous electrolyte that is typically used for rechargeable lithium ion batteries may be used. The non-aqueous electrolyte 4 has a composition in which an electrolyte salt is included in a non-aqueous solvent, the non-aqueous solvent being a solvent for the electrolyte. Examples of the non-aqueous solvent may include cyclic carbonate esters such as, e.g., at least one of propylene carbonate, ethylene carbonate, butylene carbonate, chloroethylene carbonate, fluoroethylene carbonate, and vinylene carbonate, cyclic esters such as $\gamma$-butyrolactone and $\gamma$-valerolactone, chain carbonates such as, e.g., at least one of dimethyl carbonate, diethyl carbonate, or ethylmethyl carbonate, chain esters such as methylformate, methylacetate, methylbutyrate, ethyl propionate, propyl propionate, ethers such as tetrahydrofuran or a derivative thereof, 1,3-dioxane, 1,4-dioxane, 1,2-dimethoxyethane, 1,4-dibutoxyethane, or methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more solvents. On the other hand, when two or more types of non-aqueous solvents are mixed, a mixing ratio of each non-aqueous solvent may be a mixing ratio that may be used in a conventional or other rechargeable lithium ion battery.

Examples of the electrolyte salt may include an inorganic ion salt including, e.g., at least one of lithium (Li), sodium (Na) or potassium (K) such as $LiClO_4$, $LiBF_4$, $LiAsF_6$, $LiPF_6$, $LiPF_{6-x}(C_nF_{2n+1})_x$ [provided that 1<x<6 and n=1 or 2], LiSCN, LiBr, LiI, $Li_2SO_4$, $Li_2B_{10}Cl_{10}$, $NaClO_4$, NaI, NaSCN, NaBr, $KClO_4$, KSCN, or an organic ion salt such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phthalate, stearyl lithium sulfonate, octyl lithium sulfonate, dodecylbenzene lithium sulfonate, and the like, and it is also possible to use these ionic compounds alone or in a mixture of two or more types of ionic compounds. For example, a concentration of the electrolyte salt may be the same as the concentration of an electrolyte salt used in a conventional rechargeable lithium ion battery. In some example embodiments, it is desirable to use a non-aqueous electrolyte 4 that includes the aforementioned lithium compound (electrolytic salt) at a concentration that is greater than or equal to about 0.8 mol/L and less than or equal to about 1.5 mol/L.

Meanwhile, various additives may be added to the non-aqueous electrolyte 4. Examples of such additives may include, e.g., at least one of negative electrode-acting additives, positive electrode-acting additives, ester additives, carbonate ester additives, sulfuric acid ester additives, phosphoric acid ester additives, boric acid ester additives, acid anhydride additives, and electrolyte additives. One of the above additives may be added to the non-aqueous electrolyte, and a plurality of types of additives may be added.

2. Configuration of Non-aqueous Electrolyte Rechargeable Battery According to an Example Embodiment

Hereinafter, the characteristic configuration of the non-aqueous electrolyte rechargeable battery 100 according to some example embodiments is described.

The positive electrode 1 of the non-aqueous electrolyte rechargeable battery 100 according to the example embodiment has an intermediate layer 13 between the positive electrode current collector 11 and the positive electrode mixture layer 12.

The intermediate layer 13 includes, for example, at least one of first particles, second particles, a conductive agent, and a binder for the intermediate layer.

The first particles are insulating particles including boron nitride. The first particles may have boron nitride as the main component thereof, or may be made of boron nitride. The main component refers to the component that is included in the largest amount in the particles, and for example, refers to a component that is included in a proportion that is greater than or equal to about 50 mass%, greater than or equal to about 70 mass%, or greater than or equal to about 90 mass% based on the total particles. In this example embodiment, as an example of the first particles, particles made of boron nitride are used.

The first particles have an aspect ratio of the major axis to the minor axis (major axis/minor axis), that is, an aspect ratio that is greater than or equal to about 3.0 and less than or equal to about 30, for example greater than or equal to about 3.0 and less than or equal to about 15.

As described herein, the major axis is the largest diameter of the particles, and the minor axis is the smallest diameter of the particles. For example, the particles are in the form of flakes, wherein the major axis may refer to the longest diameter of the flakes, while the minor axis may refer to a thickness of the flakes.

A method of measuring the major axis and the minor axis may be, for example, a method of calculating $D_{50}$, which is 50% of a cumulative value of a particle diameter volume-based particle size distribution obtained in a laser diffraction/-scattering method or a method of calculating the major axis and/or the minor axis from a scanning electron microscope image. One of the above measuring methods alone may be used, or both of them may be used to adopt a more accurate method. For example, when the particles are flake-shaped and too thin to precisely measure a thickness in the method of calculating $D_{50}$, the major axis may be measured by the aforementioned $D_{50}$, while the minor axis may be obtained from the scanning electron microscope image.

In the example embodiment, flake-shaped particles may be used as an example of the first particles, but the shape of the first particles may be any shape that satisfies the condition of the aspect ratio described above, and may be any one of a spherical shape, a flake shape, a columnar shape, or a needle shape.

In the particle size distribution obtained by the laser diffraction/scattering method based on the volume of the first particles, the $D_{50}$, which is a cumulative value of 50% of the particle size distribution based on the particle diameter volume, may be greater than or equal to about 0.01 $\mu$m and less than or equal to about 8 $\mu$m, for example greater than or equal to about 0.05 $\mu$m and less than or equal to about 7 $\mu$m, or greater than or equal to about 0.1 $\mu$m and less than or equal to about 6 $\mu$m.

An amount of the first particles in the intermediate layer 13 may be greater than or equal to about 40 mass% and less than or equal to about 90 mass%, for example greater than or equal to about 50 mass% and less than or equal to about 80 mass%, or greater than or equal to about 60 mass% and less than or equal to about 70 mass%, when the entire intermediate layer 13 is 100 mass%.

The second particles include at least one of a metal hydroxide and a metal oxide, and a flame retardant component.

The second particles may be or include, for example, composite particles formed by mixing and heating at least one of metal hydroxide particles and metal oxide particles with a flame retardant component.

Hereinafter, the composite particles used in the example embodiment are described.

The aforementioned composite particles are formed by heating and compositely combining at least one of endothermic metal hydroxide and metal oxide particles with a flame retardant component having radical scavenging ability through an endothermic reaction. The composite particles are a composite in which at least one of the metal hydroxide and metal oxide particles and the flame retardant component are mixed as uniformly, or substantially uniformly, as possible. The composite particles may be, for example, formed by gathering a plurality of at least one type of metal hydroxide particles and metal oxide particles including the flame retardant component on the surface and inside. Herein, the term composite means, for example, a state in which a plurality of particles are formed into a single mass by chemically bonding with a flame retardant component via functional groups (e.g., hydroxyl groups and phosphate groups) included on their surface and inside of one or more of the metal hydroxide particles and metal oxide particles. Herein, chemical bonding includes not only covalent bonding, but also various bonds such as ionic bonding, coordination bonding, and metallic bonding. The bonding state between particles may be confirmed by, for example, X-ray photoelectron spectroscopy.

In addition, the Brunauer-Emmett-Teller (BET) specific surface area of the composite particles calculated by an adsorption isotherm measured by adsorbing nitrogen onto the composite particles may be greater than or equal to about 8 $m^2/g$ and less than or equal to about 80 $m^2/g$, for example greater than or equal to about 10 $m^2/g$ and less than or equal to about 75 $m^2/g$, or greater than or equal to about 15 $m^2/g$ and less than or equal to about 75 $m^2/g$.

The metal hydroxide and metal oxide are not particularly limited, as long as the metal hydroxide and the metal oxide are or include an endothermic material capable of causing an endothermic reaction. Examples of the metal hydroxide and metal oxide may include, for example, aluminum hydroxide, pseudo-boehmite, boehmite, activated alumina, and kaolinite. These may be used alone, or two or more types of the above materials may be used together.

An amount of the metal hydroxide particles and metal oxide particles in the composite particles may be in the range of greater than or equal to about 1 mass% and less than or equal to about 60 mass%, greater than or equal to about 5 mass% and less than or equal to about 50 mass%, or greater than or equal to about 10 mass% and less than or equal to about 40 mass%, respectively, based on the total composite particles (100 mass%). The amount refers to a total content of metal hydroxide particles and metal oxide particles when multiple types of particles are used together.

The flame retardant component may be any compound having a radical scavenging ability to, e.g., capture radicals such as oxygen radicals that are generated in the positive electrode mixture layer, and may be for example derived from one or more flame retardants such as or including at least one of phosphoric acid, phosphoric acid ester, phosphonic acid, phosphonic acid ester, phosphinic acid, and phosphinic acid ester that can form a functional group containing a phosphorus (P) element by combining with at least one of the metal hydroxide and metal oxide particles. Examples of the phosphoric acid ester may include at least one of phenyl phosphate, diphenyl phosphate, and triphenyl phosphate. Examples of phosphonic acid ester may include at least one of phenylphosphonic acid and methylphosphonic acid. Examples of phosphinic acid ester may include methylphosphinic acid.

The content of P (phosphorus) element, the total content of P (phosphorus) element and B (boron) element, or the total content of P (phosphorus) element and Br (bromine) element in the composite particles measured by an inductively coupled plasma atomic emission spectrometer (ICP-AES) may be within a range that is greater than or equal to about 18 mass% and less than or equal to about 30 mass% based on the entire composite particles (100 mass%). The content of each of these elements, or the total content, may be greater than or equal to about 18 mass% and less than or equal to about 25 mass%.

The content of the P (phosphorus) element in the composite particles may be greater than or equal to about 5 mass% and less than or equal to about 30 mass%, or greater than or equal to about 8 mass% and less than or equal to about 30 mass%.

The content of the B (boron) element in the composite particles may be 0, but may be greater than or equal to about 1 mass% and less than or equal to about 25 mass%, or greater than or equal to about 5 mass% and less than or equal to about 15 mass%.

The content of Br (bromine) element in the composite particles may be 0, but may be greater than or equal to about 1 mass% and less than or equal to about 25 mass%, or greater than or equal to about 5 mass% and less than or equal to about 10 mass%.

Meanwhile, the content of Al (aluminum) element in the composite particles measured by, e.g., ICP-AES may be 0, but may be greater than or equal to about 1 mass% and less than or equal to about 30 mass%, greater than or equal to about 3 mass% and less than or equal to about 20 mass%, or greater than or equal to about 5 mass% and less than or equal to about 15 mass%.

The composite particles may have amounts of various desorbed gases due to various modifying groups within the following ranges.

When the composite particles are heated from $\geq 80$ °C to $\leq 1400$ °C, an amount of $P_2$ gas (referred to as MS1) desorbed from the composite particles as measured using a thermal desorption gas mass spectrometry (TDS-MS) may be greater than or equal to about $5 \times 10^{-6}$ mol/g and less than or equal to about $5000 \times 10^{-6}$ mol/g, for example, greater than or equal to about $200 \times 10^{-6}$ mol/g and less than or equal to about $2500 \times 10^{-6}$ mol/g, greater than or equal to about $500 \times 10^{-6}$ mol/g and less than or equal to about $2000 \times 10^{-6}$ mol/g, greater than or equal to about $600 \times 10^{-6}$ mol/g and less than or equal to about $1900 \times 10^{-6}$ mol/g, or greater than or equal to about $700 \times 10^{-6}$ mol/g and less than or equal to about $1800 \times 10^{-6}$ mol/g.

For example, when the composite particles are heated from $\geq 80$ °C to $\leq 200$ °C, an amount of desorbed $H_2O$ gas (referred to as MS2) from the composite particles as measured by TDS-MS may be greater than or equal to about $50 \times 10^{-6}$ mol/g and less than or equal to about $6000 \times 10^{-6}$ mol/g, greater than or equal to about $50 \times 10^{-6}$ mol/g and less than or equal to about $1000 \times 10^{-6}$ mol/g, greater than or equal to about $100 \times 10^{-6}$ mol/g and less than or equal to about $950 \times 10^{-6}$ mol/g, or greater than or equal to about $200 \times 10^{-6}$ mol/g and less than or equal to about $900 \times 10^{-6}$ mol/g.

Moreover, a ratio (MS1/MS2) of the amounts of desorbed gases may be greater than or equal to about 0.1 and less than or equal to about 10, greater than or equal to about 0.5 and less than or equal to about 10, greater than or equal to about 0.7 and less than or equal to about 5.0, or greater than or equal to about 0.8 and less than or equal to about 3.0. By ensuring that the ratio (MS1/MS2) of the amounts of desorbed gases satisfies the aforementioned range, both an effect of reducing or suppressing the temperature rise resulting from increasing the content of the flame retardant component in the composite particles and the battery performance can be achieved with a better balance.

Increasing the content of phosphorus element in the composite particles improves the effect of reducing or suppressing the temperature rise inside the battery. On the other hand, when an addition amount of flame retardants such as phosphoric acid or phosphonic acid is increased in order to increase the content of phosphorus element, hydrophilicity of the composite particles increases, which may make it challenging to uniformly mix the composite particles in the slurry for forming the intermediate layer. In examples, by not only phosphoric acid and phosphonic acid with a large content of the phosphorus element, but also a flame retardant having hydrophobic groups such as phosphoric acid esters and phosphonic acid esters, it is possible to reduce or suppress excessive increase in hydrophilicity while increasing the content of phosphorus element. The content of hydrophobic groups in the composite particles is evaluated by the amounts of various desorbed gases from each hydrophobic group in the composite particles, and thereby the amounts of various desorbed gases may satisfy the ranges below.

When the composite particles are heated from $\geq 80$ °C to $\leq 1400$ °C, an amount of $CH_4$ gas (referred to as MS3) desorbed from the composite particles measured by TDS-MS may be 0 mol/g, but may be greater than 0 mol/g and less than or equal to about $3000 \times 10^{-6}$ mol/g, and in the example embodiment, the amount may be greater than or equal to about $3 \times 10^6$ mol/g and less than or equal to about $400 \times 10^{-6}$ mol/g, greater than or equal to about $40 \times 10^{-6}$ mol/g and less than or equal to about $350 \times 10^{-6}$ mol/g, or greater than or equal to about $50 \times 10^{-6}$ mol/g and less than or equal to about $300 \times 10^{-6}$ mol/g.

An amount of desorbed $CH_3OH$ (referred to as MS4) measured in the same way may be 0 mol/g, but may be greater than 0 mol/g and less than or equal to about $6000 \times 10^{-6}$ mol/g, and in the example embodiment, the amount may also be greater than or equal to about $500 \times 10^{-6}$ mol/g and less than or equal to about $2500 \times 10^{-6}$ mol/g, greater than or equal to about $600 \times 10^{-6}$ mol/g and less than or equal to about $2450 \times 10^{-6}$ mol/g, or greater than or equal to about $700 \times 10^{-6}$ mol/g and less than or equal to about $2400 \times 10^{-6}$ mol/g.

When the composite particles are modified with a functional group including a phenyl group among hydrophobic groups, the composite particles may be more dispersed in the solvent when producing a slurry using a non-aqueous solvent such as N-methyl-2-pyrrolidone (NMP).

Accordingly, the amount of $C_6H_6$ (referred to as MS5) desorbed from the above composite particles from $\geq 80\ ^\circ C$ to $\leq 1400\ ^\circ C$ measured by TDS-MS of the above composite particles may be 0 mol/g, but may be greater than 0 mol/g and less than or equal to about $5000 \times 10^{-6}$ mol/g, and in the example embodiment, the amount may also be greater than or equal to about $100 \times 10^{-6}$ mol/g and less than or equal to about $2500 \times 10^{6}$ mol/g, greater than or equal to about $300 \times 10^{-6}$ mol/g and less than or equal to about $2400 \times 10^{-6}$ mol/g, or greater than or equal to about $600 \times 10^{-6}$ mol/g and less than or equal to about $2300 \times 10^{-6}$ mol/g.

The shapes of the second particles are not particularly limited, but may be spherical. In the particle size distribution obtained by the laser diffraction/scattering method based on the volume of the second particles, the $D_{50}$, which is a cumulative value of 50% of the particle size distribution based on the particle diameter volume, may be greater than or equal to about 0.01 $\mu$m and less than or equal to about 8 $\mu$m, for example greater than or equal to about 0.05 $\mu$m and less than or equal to about 5 $\mu$m, or greater than or equal to about 0.1 $\mu$m and less than or equal to about 3 $\mu$m. The particle diameter of the composite particles may be controlled by the preparing conditions of the composite particles. For example, when preparing composite particles, when the temperature is increased or the stirring speed is increased, the particle diameter of the composite particles tends to become smaller. For example, it is also possible to make the particle diameter of the composite particles smaller than the particle diameter of the starting material that is metal hydroxide or metal oxide.

An amount of the second particles in the intermediate layer 13 may be greater than or equal to about 1 mass% and less than or equal to about 40 mass%, greater than or equal to about 5 mass% and less than or equal to about 30 mass%, or greater than or equal to about 10 mass% and less than or equal to about 20 mass%, based on 100 mass% of the intermediate layer 13.

The conductive agent includes, for example, at least one of carbon black, natural graphite, artificial graphite, fibrous carbon, and sheet-shaped carbon.

Examples of the carbon black may include furnace black, channel black, thermal black, Ketjen black, and acetylene black.

From the viewpoint of being able to form a conductive pass even with a small content, it may be more desirable to use the fibrous carbon among the above examples, and for example carbon nanofibers.

An amount of the conductive agent in the intermediate layer 13 may be greater than or equal to about 0.01 mass% and less than or equal to about 10 mass%, greater than or equal to about 0.5 mass% and less than or equal to about 5 mass%, or greater than or equal to about 1 mass% and less than or equal to about 3 mass%, based on 100 mass% of the intermediate layer 13.

The binder for the intermediate layer is not particularly limited and may be any binder that can bind the components constituting the intermediate layer 13 to each other and also bind the intermediate layer 13 to the positive electrode current collector 11.

Examples of the binder for the intermediate layer may include at least one of a fluorine-containing resin such as polyvinylidene fluoride, an ethylene-containing resin such as a styrene-butadiene rubber, an ethylene-propylene-diene terpolymer, an acrylonitrile-butadiene rubber, a fluoro rubber, polyvinyl acetate, polymethylmethacrylate, polyethylene, polyvinyl alcohol, carboxymethyl cellulose or a carboxymethyl cellulose derivative (for example, a salt of carboxymethyl cellulose), or nitrocellulose.

An amount of the binder for the intermediate layer 13 may be greater than or equal to about 0.1 mass% and less than or equal to about 30 mass%, greater than or equal to about 5 mass% and less than or equal to about 25 mass%, or greater than or equal to about 10 mass% and less than or equal to about 20 mass% based on 100 mass% of the intermediate layer 13.

A thickness of the intermediate layer 13 may be greater than or equal to about 0.1 $\mu$m and less than or equal to about 10 $\mu$m, greater than or equal to about 0.5 $\mu$m and less than or equal to about 8 $\mu$m, or greater than or equal to about 1 $\mu$m and less than or equal to about 5 $\mu$m.

By setting the thickness of the intermediate layer 13 to be greater than or equal to about 0.1 $\mu$m, a sufficient short-circuit reduction or prevention effect and heat generation reduction or suppression effect may be achieved. In addition, by setting the thickness of the intermediate layer 13 to less than or equal to about 10 $\mu$m, it is possible to reduce or suppress an increase in electrical resistance and a decrease in the energy density of the battery due to installation of the intermediate layer 13. The thickness of the intermediate layer 13 may be measured, for example, in the following order. First, a cross-sectional sample is prepared by cutting the positive electrode 1 along the thickness direction thereof using a cross-sectional sample preparation device such as a cross-section polisher. The prepared cross-sectional sample is observed using a scanning electron microscope (SEM), and the thickness of the intermediate layer 13 is calculated from the SEM image. For example, the thickness of at least three locations including the center and both ends of the intermediate layer 13 in the cross-sectional sample is measured, and the average value is taken as the thickness of the intermediate layer 13.

Meanwhile, the amounts of the first and second particles in the intermediate layer 13 may be measured by the following method.

First, a cross-sectional sample production device such as a cross-section polisher is used to prepare a cross-sectional sample including the intermediate layer 13. SEM-EDS observation is performed at least at three locations including the center and both ends of the cross-sectional sample, and the mass of major elements such as boron included in the cross-sectional sample is quantified. From the results of the SEM-EDS observation described above, the molecular structures of the first and second particles constituting the intermediate layer 13 may also be determined. Based on the specified molecular structure and the mass of major elements such as boron, the masses of the first and second particles included in the cross-sectional sample are calculated. Based on the mass of the first and second particles thus prepared and the mass of the cross-sectional sample, the amounts of the first and second particles in the intermediate layer 13 may be calculated.

The equipment and conditions used for measurement may be as follows.

Measuring apparatus: An electric field emission scanning electron microscope device SM-7800F (FE-SEM, JEOL Ltd.)
Energy dispersive analyzer JED100 mm (EDS, manufactured by Japan Electronics)
Acceleration voltage: 4 kV

## 3. Manufacturing Method of Non-aqueous Electrolyte Rechargeable Battery According to an Example Embodiment

Hereinafter, the manufacturing method of the non-aqueous electrolyte rechargeable battery 100 according to an example embodiment is described.

### 3-1. Manufacturing Method of Positive Electrode

The positive electrode 1 is manufactured, for example, as follows. First, a mixture of the first particles, the second particles, the conductive agent, and the binder for the intermediate layer in a desired ratio is dispersed in an appropriate solvent to form an intermediate layer slurry. Then, the intermediate layer slurry is coated on one surface, or on both surfaces, of the positive electrode collector 11, and dried to form an intermediate layer 13. Then, a positive electrode slurry is formed by dispersing a mixture of a positive electrode active material, a conductive agent, and a positive electrode binder in a desired ratio into a solvent for positive electrode slurry. Then, the positive electrode slurry is coated on the surface of the intermediate layer 13 formed as described above and dried to form the positive electrode mixture layer 12. The positive electrode mixture layer 12 is pressed by a press machine to obtain the desired density. Accordingly, the positive electrode 1 is manufactured. Meanwhile, the coating method for each layer is not particularly limited. The coating method may include, e.g., a knife coater method, a gravure coater method, a reverse roll coater method, a slit die coater method, and the like. Each of the following coating processes is also performed by the same method.

Meanwhile, the composite particles used as the second particles in the example embodiment may be prepared by mixing at least one of metal hydroxide particles and metal oxide particles with a flame retardant and heating.

For example, a dispersion of at least one of metal hydroxide particles and metal oxide particles and a flame retardant in an appropriate solvent is heated to, for example, a temperature greater than or equal to about 40 °C and less than or equal to about 100 °C, reacted at that temperature for a duration greater than or equal to about 1 hour and less than or equal to about 48 hours, and then filtered through a filter paper to obtain composite particles.

The solvent may include water, and may include a mixture of water and an alcohol-based organic solvent such as ethanol or 2-propanol. The heating temperature may be greater than or equal to about 60 °C and less than or equal to about 80 °C and the heating time (reaction time) may be greater than or equal to about 5 hours and less than or equal to about 30 hours.

A cumulative value of 50% ($D_{50}$) of the particle size distribution based on the volume of the metal hydroxide particles used as the starting material may be greater than or equal to about 10 nm and less than or equal to about 10 $\mu$m, greater than or equal to about 0.1 $\mu$m and less than or equal to about 8 $\mu$m, or greater than or equal to about 0.5 $\mu$m and less than or equal to about 5 $\mu$m. The same applies to metal oxide particles used as starting materials.

In order to make composite particles in which a greater amount of flame retardant component derived from a flame retardant is added to the metal hydroxide, it is desirable to use a metal hydroxide particle as the starting material having a BET specific surface area that is as large as possible, and it is desirable to prepare a mixture by mixing a flame retardant component with metal hydroxides particles having a relatively large BET specific surface area, and to obtain the BET specific surface area of the composite particles by combining the mixture within the above-mentioned range. The BET specific surface area of composite particles tends to decrease when the amount of flame retardant added to the metal hydroxide particles is increased, or when the reaction time of combining the metal hydroxide particles with the flame retardant component is prolonged. Therefore, because the BET specific surface area of the composite particles may be controlled by changing these conditions, the BET specific surface area of the metal hydroxide particles as the starting material is not particularly limited, but the BET specific surface area of the metal hydroxide particles may be, for example, greater than or equal to about 100 $m^2/g$ and less than or equal to about 500 $m^2/g$. Likewise, for the metal oxide particles used as a starting material, the BET specific surface area may be greater than or equal to about 100 $m^2/g$ and less than or equal to about 500 m$^2$/g.

3-2. Manufacturing Method of Negative Electrode

First, a negative electrode slurry is prepared by dispersing a mixture of materials constituting the negative electrode mixture layer 22 in a solvent for a negative electrode slurry. Subsequently, a negative electrode mixture layer 22 is formed by coating the negative electrode slurry on the negative electrode current collector 21 and drying the negative electrode slurry. Then, the negative electrode mixture layer 22 is pressed by a press machine so as to have a desired density. Thus, a negative electrode 2 is manufactured.

3-3. Manufacturing Method of Non-aqueous Electrolyte Rechargeable Battery

Next, an electrode structure is manufactured by placing a separator 3 between the positive electrode 1 and the negative electrode 2. Then, the electrode structure may be processed into a desired shape (e.g., cylindrical shape, prismatic shape, laminated shape, button shape, and the like) and injected into a container of the above shape. Subsequently, a non-aqueous electrolyte is inserted into the corresponding container to impregnate the non-aqueous electrolyte 4 into each pore in the separator or a gap between the positive electrode 1 and the negative electrode 2. Accordingly, a rechargeable lithium ion battery is manufactured.

4. Effect by the Example Embodiment

According to the non-aqueous electrolyte rechargeable battery 100 configured as described above, because the first particles including boron nitride having a relatively low Young's modulus are included and the aspect ratio (major axis/minor axis) of the first particle is set to be greater than or equal to about 3.0 and less than or equal to about 30, the intermediate layer 13 including the first particles may substantially deform along the surface shape of the positive electrode current collector when pierced by a foreign substance such as, e.g., a nail, and exposure of the positive electrode current collector can be reduced or suppressed.
The boron nitride may capture active oxygen, thereby reducing or suppressing a decomposition reaction of an electrolyte solution and thus reducing or suppressing the possible temperature rise of the battery.
Because the intermediate layer 13 further includes second particles including a metal hydroxide or metal oxide and a flame retardant component, the temperature rise of the battery may be reduced or suppressed, and safety may be further drastically improved by the effect of reducing or suppressing the endothermic reaction by the metal hydroxide or metal oxide and a decomposition reaction of an electrolyte solution by radical capture by the flame retardant component.

5. Another Example Embodiment

The present disclosure is not limited to the aforementioned example embodiments.
For example, the second particles are not limited to the composite particles described above, and the following particles may be used.

5-1. Second Embodiment

The composite particles described in the second example embodiment, like the composite particles described in the above-described example embodiments, are composite particles including at least one of metal hydroxide and metal oxide particles and a flame retardant component, and their properties and compositions are as follows.
When the composite particles are heated from $\geq 80$ °C to $\leq 1400$ °C, the amount of P$_2$ gas desorbed from the composite particles, as measured by TDS-MS (referred to as MS1), may be greater than or equal to about $200 \times 10^{-6}$ mol/g and less than or equal to about $2500 \times 10^{-6}$ mol/g, and when the composite particles are heated from $\geq 80$ °C to $\leq 1400$ °C, the amount of H$_2$O gas desorbed from the composite particles, as measured by TDS-MS (referred to as MS2), may be greater than or equal to about $50 \times 10^{-6}$ mol/g and less than or equal to about $1000 \times 10^{-6}$ mol/g.
MS1 may be greater than or equal to about $300 \times 10^{-6}$ mol/g and less than or equal to about $2000 \times 10^{-6}$ mol/g, or greater than or equal to about $400 \times 10^{-6}$ mol/g and less than or equal to about $1800 \times 10^{-6}$ mol/g.
MS2 may be greater than or equal to about $100 \times 10^{-6}$ mol/g and less than or equal to about $950 \times 10^{-6}$ mol/g, or greater than or equal to about $300 \times 10^{-6}$ mol/g and less than or equal to about $900 \times 10^{-6}$ mol/g.
Moreover, a ratio (MS1/MS2) of the amounts of desorbed gases may be greater than or equal to about 0.1 and less than or equal to about 10.0, greater than or equal to about 0.3 and less than or equal to about 5.0, or greater than or equal to about 0.5 and less than or equal to about 3.0. By ensuring that the ratio (MS1/MS2) of the amounts of desorbed gases satisfies this desirable range, both the temperature rise reduction or suppression effect by increasing modification by the flame retardant component and the battery performance may be well balanced.

In addition, the BET specific surface area of the composite particles calculated by an adsorption isotherm measured by adsorbing nitrogen onto the composite particles may be greater than or equal to about 8 $m^2/g$ and less than or equal to about 80 $m^2/g$, greater than or equal to about 10 $m^2/g$ and less than or equal to about 75 $m^2/g$, or greater than or equal to about 15 $m^2/g$ and less than or equal to about 75 $m^2/g$.

In order to make composite particles by adding a greater amount of flame retardant component to the metal hydroxide, it is desirable to use a metal hydroxide particle as the starting material having a BET specific surface area that is as large as possible, and it is desirable to mix a flame retardant component with metal hydroxide particles having a relatively large BET specific surface area and make the BET specific surface area of the composite particles by combining them within the above-mentioned range. The BET specific surface area of composite particles tends to decrease when the amount of flame retardant added to the metal hydroxide particles is increased or when the reaction time of combining the metal hydroxide and the flame retardant component is prolonged. Therefore, because the BET specific surface area of the composite particles may be controlled by changing these conditions, the BET specific surface area of the metal hydroxide particles as the starting material is not particularly limited, but the specific surface area of the metal hydroxide particles may be, for example, greater than or equal to about 100 $m^2/g$ and less than or equal to about 500 $m^2/g$. The above descriptions may be applied for metal oxide particles.

For the composite particles according to the example embodiment, the contents of the Al (aluminum) element and the P (phosphorus) element measured by an inductively coupled plasma atomic emission spectrometer (ICP-AES) may be within the following ranges.

A content of Al element in the composite particles may be greater than or equal to about 1 mass% and less than or equal to about 50 mass%, greater than or equal to about 3 mass% and less than or equal to about 40 mass%, or greater than or equal to about 5 mass% and less than or equal to about 30 mass%.

A content of the P element in the composite particles may be greater than or equal to about 1 mass% and less than or equal to about 50 mass%, greater than or equal to about 3 mass% and less than or equal to about 40 mass%, or greater than or equal to about 5 mass% and less than or equal to about 30 mass%.

In order to further enhance the heat absorption effect by the composite particles, the composite particles may be modified with functional groups such as a $CH_3$ group and a $CH_2OH$ group. A degree of modification by these functional groups may be evaluated by the desorption amount of the following various gases derived from these functional groups, in the same manner as the degree of modification by a functional group including a phosphorus (P) element (e.g., phosphonic acid), and the desorption amounts of various gases satisfies the following ranges. The desorption amounts of various gases may be adjusted by the type and amount of the metal hydroxide, metal oxide and flame retardant used in preparing the composite particles.

When the composite particles are heated from $\geq 80$ °C to $\leq 1400$ °C, the amount of $CH_4$ gas desorbed from the composite particles, as measured by TDS-MS (referred to as MS3), may be 0 mol/g, but may be greater than 0 and less than or equal to about $1000 \times 10^{-6}$ mol/g, greater than or equal to about $10 \times 10^{-6}$ mol/g and less than or equal to about $700 \times 10^{-6}$ mol/g, or greater than or equal to about $30 \times 10^{-6}$ mol/g and less than or equal to about $500 \times 10^{-6}$ mol/g. The amount of desorbed $CH_3OH$ (referred to as MS4) measured in the same manner may be 0 mol/g, but may also be greater than 0 mol/g and less than or equal to about $4000 \times 10^{-6}$ mol/g, greater than or equal to about $200 \times 10^{-6}$ mol/g and less than or equal to about $3000 \times 10^{-6}$ mol/g, or greater than or equal to about $500 \times 10^{-6}$ mol/g and less than or equal to about $3000 \times 10^{-6}$ mol/g.

When the composite particles are modified by a functional group including a phenyl group, it is possible to disperse the composite particles in a solvent when preparing a slurry for an intermediate layer using a non-aqueous solvent such as N-methyl-2-pyrrolidone (NMP).

Accordingly, the amount of $C_6H_6$ desorbed form the composite particles from $\geq 80$ °C to $\leq 1400$ °C by TDS-MS (referred to as MS5) may be 0 mol/g, but may also be greater than 0 mol/g and less than or equal to about $4000 \times 10^{-6}$ mol/g, greater than or equal to about $10 \times 10^{-6}$ mol/g and less than or equal to about $3000 \times 10^{-6}$ mol/g, or greater than or equal to about $100 \times 10^{-6}$ mol/g and less than or equal to about $3000 \times 10^{-6}$ mol/g.

A total amount of the modifying molecules (i.e., flame retardant component) in the composite particles may be in the range of greater than or equal to about 10 mass% and less than or equal to about 99 mass%, greater than or equal to about 20 mass% and less than or equal to about 97 mass%, or greater than or equal to about 30 mass% and less than or equal to about 95 mass% based on 100 mass% of the total composite particles.

5-2. Third Embodiment

In addition, as composite particles, it is also possible to further use composite particles in which at least one of metal hydroxide particles and metal oxide particles is combined with not only a flame retardant component, but also with conductive particles.

These composite particles may be as described below.

The metal hydroxide particles and the metal oxide particles may be any particles capable of causing an endothermic reaction, and are not particularly limited. Examples of the metal hydroxides and metal oxides may include, for example, aluminum hydroxide, pseudo-boehmite, boehmite, activated alumina, and kaolinite. These may be used alone, or two or more types of the metal hydroxides and metal oxides may be used together.

The average primary particle diameter of the metal hydroxide particles may be greater than or equal to about 10 nm and less than or equal to about 20 $\mu$m, or greater than or equal to about 50 nm and less than or equal to about 10 $\mu$m. The above descriptions may be applied to metal oxide particles.

The conductive particles may be any conductive particles, and are not particularly limited. Examples of materials constituting the above-mentioned conductive particles may include, for example, carbon materials, metal nanoparticles, and the like.

Examples of the metal nanoparticles may include gold nanoparticles, silver nanoparticles, copper nanoparticles, and the like.

As the carbon material, examples thereof may include at least one of carbon black, natural graphite, artificial graphite, fiber carbon, and sheet-shaped carbon.

Examples of the carbon black may include furnace black, channel black, thermal black, Ketjen black, and acetylene black.

Examples of the fibrous carbon may include carbon nanofibers such as single-layer carbon nanotubes, multi-layer carbon nanotubes, and the like, and examples of sheet-shaped carbon may include graphene and the like.

The composite particles may include the conductive particles as described above, so that a ratio ($A_D/A_G$) of the peak area ($A_D$) around 1350 cm$^{-1}$ and the peak area ($A_G$) around 1580 cm$^{-1}$ measured by Raman spectroscopy may be greater than or equal to about 0.5 and less than or equal to about 3.5, and the peak full width at half maximum (G'-FWHM) around 2680 cm$^{-1}$ measured by Raman spectroscopy is in the range of greater than or equal to about 60 cm$^{-1}$ and less than or equal to about 150 cm$^{-1}$.

The average primary particle diameter or fiber length of the conductive particles may be greater than or equal to about 1 nm and less than or equal to about 10 $\mu$m, or greater than or equal to about 10 nm and less than or equal to about 1 $\mu$m. When using metal nanoparticles as the conductive particles, the metal nanoparticles having any particle diameter may be used as long as the average primary particle diameter is on the order of nanometers (nm), but for example the average primary particle diameter may be greater than or equal to about 1 nm and less than or equal to about 500 nm.

An amount of the metal hydroxide particles and the metal oxide particles in the composite particles may be in the range of greater than or equal to about 1 mass% and less than or equal to about 60 mass%, greater than or equal to about 5 mass% and less than or equal to about 50 mass%, or greater than or equal to about 10 mass% and less than or equal to about 40 mass% based on the total composite particles. The amount refers to a total amount when multiple types of the metal hydroxide particles and the metal oxide particles are used together.

The amount of the conductive particles in the composite particles may be in the range of greater than or equal to about 0.1 mass% and less than or equal to about 25 mass%, greater than or equal to about 0.5 mass% and less than or equal to about 20 mass%, or greater than or equal to about 1 mass% and less than or equal to about 15 mass% based on the total composite particles.

The composite particles have a BET specific surface area and a degree of modification by various modifying groups within the following ranges.

A specific surface area BET1 calculated based on an adsorption isotherm measured by adsorbing water vapor into the composite particles may be greater than or equal to about 8 m$^2$/g and less than or equal to about 600 m$^2$/g, and a specific surface area BET2 of the composite particles calculated by an adsorption isotherm measured by adsorbing nitrogen into the composite particles may be greater than or equal to about 8 m$^2$/g and less than or equal to about 600 m$^2$/g.

BET1 may be greater than or equal to about 10 m$^2$/g and less than or equal to about 300 m$^2$/g, or greater than or equal to about 12 m$^2$/g and less than or equal to about 100 m$^2$/g.

BET2 may be greater than or equal to about 9 m$^2$/g and less than or equal to about 300 m$^2$/g, or greater than or equal to about 10 m$^2$/g and less than or equal to about 100 m$^2$/g.

In addition, the specific surface area ratio BET1/BET2 of these BET1 and BET2 may be greater than or equal to about 0.2 and less than or equal to about 5.0, greater than or equal to about 0.5 and less than or equal to about 4.0, or greater than or equal to about 1.0 and less than or equal to about 3.0.

In addition, when the composite particles are heated from $\geq$ 80 °C to $\leq$ 1400 °C, the amount of $P_2$ gas desorbed from the composite particles, as measured by TDS-MS (referred to as MS1), may be greater than or equal to about $300 \times 10^{-6}$ mol/g and less than or equal to about $3000 \times 10^{-6}$ mol/g. This amount of desorbed $P_2$ (MS1) is an indicator of the degree of modification of the composite particles by phosphonic acid.

When the composite particles are heated from $\geq$ 80 °C to $\leq$ 1400 °C, the amount of $H_2O$ gas desorbed from the composite particles, as measured by TDS-MS (referred to as MS2), may be greater than or equal to about $30 \times 10^{-6}$ mol/g and less than or equal to about $1500 \times 10^{-6}$ mol/g. This amount of desorbed $H_2O$ constitutes a reference value for the degree of modification of the composite particles, and the ratio MS1/MS2 of the amounts of these desorbed gases may be greater than or equal to about 0.5 and less than or equal to about 5.0, greater than or equal to about 1.0 and less than or equal to about 4.0, or greater than or equal to about 1.5 and less than or equal to about 3.0.

In order to further enhance the heat absorption effect by the composite particles, the composite particles may be modified with functional groups such as a $CH_3$ group and a $CH_2OH$ group. The degree of modification by these functional groups may be evaluated by the desorption amounts of following various gases derived from these functional groups, similar to the degree of modification by phosphonic acid, and desorption amounts of various gases may satisfy the following range.

When the composite particles are heated from $\geq 80$ °C to $\leq 1400$ °C, it may be desirable that the amount of $CH_4$ desorbed from the composite particles (referred to as MS3) measured by TDS-MS may be greater than or equal to about $30 \times 10^{-6}$ mol/g and less than or equal to about $1000 \times 10^{-6}$ mol/g, and the amount of desorbed $CH_3OH$ (referred to as MS4) measured in the same manner may be greater than or equal to about $10 \times 10^{-6}$ mol/g and less than or equal to about $1000 \times 10^{-6}$ mol/g.

MS3 may be greater than or equal to about $50 \times 10^{-6}$ mol/g and less than or equal to about $300 \times 10^{-6}$ mol/g, or greater than or equal to about $60 \times 10^{-6}$ mol/g and less than or equal to about $250 \times 10^{-6}$ mol/g.

MS4 may be greater than or equal to about $20 \times 10^{-6}$ mol/g and less than or equal to about $2000 \times 10^{-6}$ mol/g, or greater than or equal to about $25 \times 10^{-6}$ mol/g and less than or equal to about $1900 \times 10^{-6}$ mol/g.

When the composite particles are modified by a functional group including a phenyl group, it is possible to disperse the composite particles in a solvent when producing a slurry such as a positive electrode composite slurry.

Accordingly, the amount of $C_6H_6$ desorbed from the composite particles at about 80 °C to $\leq 1400$ °C measured by TDS-MS (called MS5) may be greater than or equal to about $1 \times 10^{-6}$ mol/g and less than or equal to about $4000 \times 10^{-6}$ mol/g, greater than or equal to about $2 \times 10^{-6}$ mol/g and less than or equal to about $2000 \times 10^{-6}$ mol/g, or greater than or equal to about $3 \times 10^{-6}$ mol/g and less than or equal to about $1600 \times 10^{-6}$ mol/g.

The total amount of the modifying molecules in the composite particles may be in the range of greater than or equal to about 10 mass% and less than or equal to about 90 mass%, greater than or equal to about 20 mass% and less than or equal to about 80 mass%, or greater than or equal to about 30 mass% and less than or equal to about 70 mass% based on 100 mass% of the total composite particles.

As for the heat absorption properties by the composite particles realized by the specific surface area and the various modifying groups as described above, the heat absorption amount at a temperature of about 50 °C to $\leq 250$ °C in differential scanning calorimetry may be greater than or equal to about 150 J/g and less than or equal to about 500 J/g, greater than or equal to about 170 J/g and less than or equal to about 400 J/g, or greater than or equal to about 180 J/g and less than or equal to about 300 J/g.

As in this example embodiment, when the composite particles already include conductive particles, a conductive agent other than the composite particles may or may not be added again when forming the intermediate layer.

The present disclosure is not limited to these example embodiments, and various modifications are possible without departing from the scope thereof.

Examples

Hereinafter, the present disclosure is described in more detail based on examples. However, the following examples are merely examples of the present disclosure, and the present disclosure is not limited to the following examples.

Preparation of Composite Particles used as Second Particles:

Examples 1 to 4 and Comparative Examples 2 and 3:

1.0 g of Kaolinite ($Al_2Si_2O_5(OH)_4$, $D_{50}$: 1 $\mu$m, BET: 120 m$^2$/g) was used as a metal hydroxide particle, 5.0 g of phenyl phosphate was used as a flame retardant, and were dispersed in 50 cc of a mixed solution of ethanol and purified water (mixing ratio 1:1). After heating this dispersion at 70 °C for 24 hours, the composite particles (A) were obtained by filtering, washing with water and ethanol, and then vacuum drying the solid on the filter paper.

Examples 5 to 8:

Composite particles (B) were obtained in the same manner as in Example 1, with a difference that 1.0 g of activated alumina ($D_{50}$: 1.5$\mu$m, BET: 312 m$^2$/g) was used as a metal oxide particle and 5.0 g of methylphosphinic acid was used as a flame retardant.

Examples 9 to 12:

Composite particles (C) were obtained in the same manner as in Example 1, with a difference that 1.0 g of pseudo-boehmite ($D_{50}$: 1.0 μm, BET: 391 $m^2$/g) was used as a metal hydroxide particle and 5.0 g of diphenyl phosphate was used as a flame retardant.

Examples 13 to 16:

Composite particles (D) were obtained in the same manner as in Example 1, with a difference that 1.0 g of aluminum hydroxide ($D_{50}$: 1.2 μm, BET: 212 $m^2$/g) was used as the metal hydroxide particle and 5.0 g of phenylphosphonic acid was used as the flame retardant.

Manufacturing of Intermediate Layer

Examples 1 to 16 and Comparative Examples 2 and 3:

The first and second particles were used as described in Table 1 below, and the mass ratios of these first and second particles, carbon nanofibers as a conductive agent, and polyvinylidene fluoride as a binder for the intermediate layer were set to 64:16:2:18, and then dispersed and mixed in an N-methyl-2-pyrrolidone solvent to prepare each intermediate layer slurry. Next, an intermediate layer was prepared by coating and drying the intermediate layer slurry on both surfaces of the aluminum current collector foil so that the coated amount of the mixture (area density) after drying was 0.5 mg/$cm^2$ on one surface.

Comparative Examples 4 to 6:

Intermediate layers of Comparative Examples 4 to 6 were prepared in the same manner as in Example 1, with a difference that activated alumina was added as metal oxide particles which surface and interior were not treated with a flame retardant component.

Manufacturing of Positive Electrode

Examples 1 to 16 and Comparative Examples 2 to 8:

A positive electrode mixture slurry was prepared by dispersing and mixing $LiCoO_2$ ($D_{50}$: 17 μm), acetylene black, and polyvinylidene fluoride in a mass ratio of 97.7:1.0:1.3: in an N-methyl-2-pyrrolidone solvent. Next, the positive electrode mixture slurry was coated and dried on the intermediate layer so that the amount of coated mixture (area density) after drying became 20.50 mg/$cm^2$ on one surface, and then pressed using a roll press so that the mixture layer density became 4.15 g/cc, thereby manufacturing a positive electrode.

Comparative Example 1:

A positive electrode was manufactured in the same manner as in Example 1, with a difference that the positive electrode mixture slurry was directly coated on both surfaces of an aluminum current collector and dried without forming an intermediate layer.

Manufacturing of Negative Electrode

Examples 1 to 16 and Comparative Examples 1 to 8:

Artificial graphite, carboxymethyl cellulose sodium salt (CMC), and styrene-butadiene-based water dispersion were dissolved and dispersed in an aqueous solvent so that the mass ratio of dry powder (solid content) including no solvent is 97.5:1.0:1.5, to prepare a negative electrode mixture slurry. Next, the negative electrode mixture slurry was coated and dried on both surfaces of the copper foil, so that the mixture coating amount (surface density) after drying was 15.0 mg/$cm^2$, and then the pressed with a roll press machine to manufacture a negative electrode so that the negative electrode mixture layer density is 1.65 g/cc.

Manufacturing of Rechargeable Battery Cells

Examples 1 to 16 and Comparative Examples 1 to 8:

A plurality of the positive electrodes and a plurality of the negative electrodes were stacked with a polypropylene porous separator between the positive and negative electrodes to have battery design capacity of 300 mAh, manufacturing an electrode stack. At this time, as the positive electrode and negative electrode are placed inside the electrode stack, mixture layers formed on both surfaces of the current collector were used, and for the positive electrode or negative electrode disposed on the outermost layer, a mixture layer formed on only one surface was used. For example, a positive electrode with an electrode plate area of 8.5 $cm^2$ (both surfaces, 5 sheets) and a negative electrode with an electrode plate area of 10.0 $cm^2$ (4 sheets of both surfaces and 2 sheets of one surface) were manufactured. Subsequently, a rechargeable battery cell before the initial charge was manufactured by welding nickel and aluminum lead wires respectively to the negative and positive electrodes of the electrode stack, housing the electrode stack in an aluminum laminate film with the lead wires externally pulled out, injecting an electrolyte solution thereinto, and sealing the aluminum laminate film under a reduced pressure. The electrolyte solution was prepared by dissolving 1.3 M $LiPF_6$ and 1 wt% of vinylene carbonate in a mixed solvent of ethylene carbonate/dimethyl carbonate/fluoroethylene carbonate in a volume ratio of 15/80/5.

Evaluation of First Particles, Second Particles, or Metal Oxide Particles

The evaluation of the first particles, second particles, or metal oxide particles (activated alumina) used in Examples and Comparative Examples was conducted as follows.

Measurement of Particle Diameter:

The particle diameters of the first and second particles or metal oxide particles were evaluated as $D_{50}$, 50% of the cumulative value of the particle size distribution based on the particle diameter volume in the particle size distribution obtained by laser diffraction/scattering method. The particle diameters of the first and second particles or metal oxide particles were measured using the following measuring apparatus and measuring conditions.

Measuring device: Laser diffraction/scattering particle diameter distribution measuring device MT3300 (manufactured by Micro Track Bell)
Permeability: Permeable
Shape: Non-spherical
Circulation speed: 7
Measurement time: 30 seconds
Number of repetitions: 3
Refractive index:

a. first particles, second particles, or metal oxide particles: 1.65-0.00i
b. ethanol solvent: 1.36-0.00i

Major Axis and Minor Axis Ratio of First Particle, Aspect Ratio:

In the present Examples and Comparative Examples, the average particle diameter ($D_{50}$) obtained by the laser diffraction/scattering method as described above was used as the major axis of the first particles.
After attaching the first particles onto a carbon tape, the thickness of 100 random particles was measured using a scanning electron microscope JSM-7800F (manufactured by Nippon Electronics Co., Ltd.), and the arithmetic averages were taken as the minor axis of the first particles, and the major axis and minor axis ratios (major axis/minor axis, aspect ratio) mentioned above were calculated.

Mass of Desorbed Gas of Second Particles:

Thermal desorption gas mass spectrometry (TDS-MS) was performed using a thermal desorption mass spectrometer TDS-1200 manufactured by Electronic Science, and the desorbed amounts of two phosphorus molecules and water molecules were measured and analyzed according to the following method.
In TDS, the second particles were set by using a sample stage made of quartz and a sample dish made of SiC. In addition, the temperature rise rate was 60 °C/min. The temperature rise was controlled by monitoring a temperature on the sample surface. Furthermore, a weight of the sample was 1 mg, which was corrected by an actual weight (0.5 mg). A quadruple mass spectrometer was used for a detection, and a voltage applied thereto was 1000 V.

**EP 4 700 840 A1**

TDS was used to measure an amount ($\mu$mol/g) of each gas desorbed from the second particles (composite particles) during the temperature rise from 80 °C to 1400° C. The mass number [M/z] used for analyzing the measurements was 18 for $H_2O$, and 62 for $P_2$, wherein gases corresponding to the mass numbers were all each of the aforementioned substances. Herein, regarding the gas amount of $H_2O$, a cumulative value only from 80 °C to 200 °C out of the entire temperature range was used to obtain the amount of the desorbed $H_2O$.

Confirmation of Exothermic Peak at 150 °C or lower in Coexistence of Electrolyte Solution with Second Particles or Metal Oxide Particles

2.0 mg of each second particles (each composite particle) or metal oxide particles (activated alumina) manufactured as described above and 0.5 mg of the same electrolyte solution used when manufacturing the rechargeable battery cells were placed in a special airtight container and caulked, and then an exothermic peak measurement was performed on the second particles or metal oxide particles under the following conditions to confirm the presence or absence of an exothermic peak at 150 °C or lower. In Comparative Examples 4 to 6, a clear exothermic peak was observed near 100 °C, but in Examples 1 to 4, this exothermic peak was not observed. Furthermore, the maximum exothermic peak temperature of each particle was measured using a differential scanning calorimeter: DSC (manufactured by Hitachi High-Tech Sciences Co., Ltd.) at a temperate rise rate of 5 K/min in accordance with the provisions of JIS K7121, and the peak of the exothermic decomposition temperature was confirmed.

Evaluation of Rechargeable Battery Cells

Cycle Characteristics

The rechargeable battery cells according to Examples 1 to 16 and Comparative Examples 1 to 8 were charged under a constant current to 4.4 V at 0.1 CA (capacity in ampere-hour) of design capacity and charged under a constant voltage to 0.05 CA still at 4.4 V in a 25 °C thermostat. Subsequently, the cells were discharged under a constant current to 3.0 V at 0.1 CA. In addition, the cells were measured with respect to initial discharge capacity after the 1st cycle through a constant current charge at 0.2 CA, a constant voltage charge at 0.05 CA, and a constant current discharge at 0.2 CA under conditions of a charge cut-off voltage of 4.4 V and a discharge cut-off voltage of 3.0 V in the 25 °C thermostat. The rechargeable battery cells were 100 cycles charged and discharged through a constant current charge at 0.5 CA, a constant voltage charge at 0.05 CA, and a constant current discharge 0.5 CA under conditions of a charge cut-off voltage of 4.3 V and a discharge cut-off voltage of 3.0 V at 45 °C to test a cycle-life. After the 100 cycles, discharge capacity at a constant current charge of 0.2 CA, a constant voltage charge of 0.05 CA, and a discharge at 0.2 CA of the cells was measured and was divided by the initial discharge capacity to obtain capacity retention after the 100 cycles.

Nail Penetration Test

A nail penetration test was conducted at a speed of 1 mm/s by penetrating a nail with a diameter of 3 mm into the central portion of the rechargeable battery cells (10 each) manufactured in Examples 1 to 16 and Comparative Examples 1 to 8. A case where an external temperature of a battery cell reached 50 °C or higher 5 seconds after being penetrated with the nail was regarded as "abnormal occurrence," and an abnormal occurrence rate was evaluated in the 10 battery tests.

Heating Test

The rechargeable battery cells (10 each) manufactured in Examples 1 to 16 and Comparative Examples 1 to 8 were charged under a constant current of 0.1 CA of the design capacity up to 4.45 V in a thermostat at 25 °C, and then charged at a constant voltage until the voltage became 0.05 CA at 4.45 V. Subsequently, the cells were discharged to 3.0 V at 0.1 CA under a constant current. In addition, in the 25 °C thermostat, after performing a constant current charge at 0.2 CA, a constant voltage charge at 0.05 CA, and a constant current discharge at 0.2 CA under conditions of a charge cut-off voltage of 4.45 V and a discharge cut-off voltage of 3.0 V as 1 cycle, the cells were charged again under a constant current/constant voltage to 4.45 V, which were regarded as initial cells. These rechargeable battery cells were left for 1 hour in a thermostat heated to 165 °C, and a case where a voltage of a battery cell became 4.2 V or less was regarded as "abnormal occurrence," and an abnormal occurrence rate was evaluated in the 10 battery cell tests.

Evaluation Results

The types, properties, and amounts of the first particles, second particles, and metal oxide particles used instead of the second particles in Examples and Comparative Examples described above are shown in Table 1 below.

**17**

Additionally, the evaluation results of Examples 1 to 16 and Comparative Examples 1 to 8 are summarized and shown in Table 2 below.

Table 1:

| | | First particles | | | Second particles or Metal oxide particles | | | | |
| | Material | Particle diameter | Major axis/minor axis | Material | Thermal desorption gas mass | | Desorbed gas mass ratio | Particle diameter |
| | | $D_{50}$ ($\mu$m) | - | | MS1 ($\mu$mol/g) | MS2 ($\mu$mol/g) | MS1/MS2 | $D_{50}$ ($\mu$m) |
|---|---|---|---|---|---|---|---|---|
| Ex. 1 | boron nitride A | 0.7 | 4.3 | Composite particle A | 1195 | 558 | 2.1 | 0.8 |
| Ex. 2 | boron nitride B | 6 | 27.3 | Composite particle A | 1195 | 558 | 2.1 | 0.8 |
| Ex. 3 | boron nitride C | 1 | 5.3 | Composite particle A | 1195 | 558 | 2.1 | 0.8 |
| Ex. 4 | boron nitride D | 3.2 | 14.2 | Composite particle A | 1195 | 558 | 2.1 | 0.8 |
| Ex. 5 | boron nitride A | 0.7 | 4.3 | Composite particle B | 1598 | 845 | 1.9 | 0.9 |
| Ex. 6 | boron nitride B | 6 | 27.3 | Composite particle B | 1598 | 845 | 1.9 | 0.9 |
| Ex. 7 | boron nitride C | 1 | 5.3 | Composite particle B | 1598 | 845 | 1.9 | 0.9 |
| Ex. 8 | boron nitride D | 3.2 | 14.2 | Composite particle B | 1598 | 845 | 1.9 | 0.9 |
| Ex. 9 | boron nitride A | 0.7 | 4.3 | Composite particle C | 585 | 725 | 0.8 | 0.6 |
| Ex. 10 | boron nitride B | 6 | 27.3 | Composite particle C | 585 | 725 | 0.8 | 0.6 |
| Ex. 11 | boron nitride C | 1 | 5.3 | Composite particle C | 585 | 725 | 0.8 | 0.6 |
| Ex. 12 | boron nitride D | 3.2 | 14.2 | Composite particle C | 585 | 725 | 0.8 | 0.6 |
| Ex. 13 | boron nitride A | 0.7 | 4.3 | Composite particle D | 908 | 754 | 1.2 | 1.2 |
| Ex. 14 | boron nitride B | 6 | 27.3 | Composite particle D | 908 | 754 | 1.2 | 1.2 |
| Ex. 15 | boron nitride C | 1 | 5.3 | Composite particle D | 908 | 754 | 1.2 | 1.2 |
| Ex. 16 | boron nitride D | 3.2 | 14.2 | Composite particle D | 908 | 754 | 1.2 | 1.2 |
| Comp. Ex. 1 | Intermediate layer was not present | | | | | | | |
| Comp. Ex. 2 | boron nitride E | 11 | 32.1 | Composite particle A | 1195 | 558 | 2.1 | 0.8 |

(continued)

| | Intermediate layer | | | | | | | |
|---|---|---|---|---|---|---|---|---|
| | First particles | | | Second particles or Metal oxide particles | | | | |
| | Material | Particle diameter | Major axis/ minor axis | Material | Thermal desorption gas mass | | Desorbed gas mass ratio | Particle diameter |
| | | $D_{50}$ (μm) | - | | MS1 (μmol/g) | MS2 (μmol/g) | MS1/MS2 | $D_{50}$ (μm) |
| Comp. Ex. 3 | boron nitride F | 0.1 | 2.5 | Composite particle A | 1195 | 558 | 2.1 | 0.8 |
| Comp. Ex. 4 | boron nitride A | 0.7 | 4.3 | alumina | 0 | 45 | 0 | 0.7 |
| Comp. Ex. 5 | boron nitride B | 6 | 27.3 | alumina | 0 | 45 | 0 | 0.7 |
| Comp. Ex. 6 | boron nitride C | 1 | 5.3 | alumina | 0 | 45 | 0 | 0.7 |
| Comp. Ex. 7 | boron nitride A | 0.7 | 4.3 | Second particles were not present | | | | |
| Comp. Ex. 8 | boron nitride B | 6 | 27.3 | Second particle were not present | | | | |

Table 2:

| | Presence or absence of an exothermic peak at 150 °C or lower in coexistence of electrolyte solution with second particles | Cell resistance (Ω) | Discharge capacity retention rate after 100 cycles (%) | Nail penetration test abnormal occurrence (%) |
|---|---|---|---|---|
| Ex. 1 | No | 1.6 | 90.1 | 0 |
| Ex. 2 | No | 1.4 | 90.3 | 0 |
| Ex. 3 | No | 1.5 | 90.2 | 0 |
| Ex. 4 | No | 1.5 | 90.3 | 0 |
| Ex. 5 | No | 1.5 | 90.3 | 10 |
| Ex. 6 | No | 1.4 | 90.2 | 0 |
| Ex. 7 | No | 1.5 | 90.3 | 0 |
| Ex. 8 | No | 1.5 | 90.2 | 10 |
| Ex. 9 | No | 1.6 | 90.1 | 10 |
| Ex. 10 | No | 1.5 | 90.2 | 10 |
| Ex. 11 | No | 1.5 | 90.2 | 0 |
| Ex. 12 | No | 1.5 | 90.2 | 10 |
| Ex. 13 | No | 1.6 | 90.1 | 10 |
| Ex. 14 | No | 1.4 | 90.3 | 0 |
| Ex. 15 | No | 1.5 | 90.3 | 0 |
| Ex. 16 | No | 1.4 | 90.3 | 0 |
| Comp. Ex. 1 | - | 1.3 | 90.3 | 100 |

(continued)

|  | Presence or absence of an exothermic peak at 150 °C or lower in coexistence of electrolyte solution with second particles | Cell resistance ($\Omega$) | Discharge capacity retention rate after 100 cycles (%) | Nail penetration test abnormal occurrence (%) |
|---|---|---|---|---|
| Comp. Ex. 2 | No | 1.3 | 90.3 | 40 |
| Comp. Ex. 3 | No | 1.5 | 90.1 | 50 |
| Comp. Ex. 4 | Yes | 1.5 | 90.2 | 60 |
| Comp. Ex. 5 | Yes | 1.5 | 90.2 | 50 |
| Comp. Ex. 6 | Yes | 1.4 | 90.3 | 60 |
| Comp. Ex. 7 | - | 1.5 | 90.2 | 60 |
| Comp. Ex. 8 | - | 1.4 | 90.3 | 40 |

Consideration:

From the results in Table 2 above, in Examples 1 to 16, the occurrence rate of abnormalities in the nailing test was sufficiently reduced or suppressed. This may be because, in Examples 1 to 16, by using an insulating material including boron nitride as the first particles, setting the ratio of the major axis to the minor axis (major axis/minor axis) of the first particles to be in the range of greater than or equal to about 3.0 and less than or equal to about 30, and using a material including at least one of a metal hydroxide and a metal oxide and a flame retardant component as the second particles, the temperature rise inside the battery were sufficiently reduced or suppressed even under conditions in which a battery short circuit is likely to occur. Meanwhile, in Comparative Examples 1 to 8 (Comparative Example 1 not including an intermediate layer, Comparative Examples 2 to 3 in which the aspect ratio of the first particles included in the intermediate layer is outside of the above range, Comparative Examples 4 to 6 in which metal oxide particles are used as they are instead of the second particles, and Comparative Examples 7 to 8 not including the second particles), the abnormality occurrence rates were clearly higher compared to Examples 1 to 16.

A factor in the effectiveness of Examples 1 to 16 may be that, when a nail penetrates, the intermediate layer including the first particles with a low Young's modulus and an adjusted aspect ratio deforms to follow the shape of the nail or the positive electrode current collector, thereby reducing the exposure rate of the positive electrode current collector. In addition, because the first particles including boron nitride having an active oxygen capturing effect and the second particles including at least one of a metal hydroxide and a metal oxide and a flame retardant component are present in the vicinity of the positive electrode current collector, heat generation at the short circuit point can be reduced even when a micro-short circuit occurs.

On the other hand, as in Comparative Example 2, when the first particle having an excessively high aspect ratio was included in the intermediate layer, the number of first particles present in the intermediate layer has decreased or the first particles were broken rather than deformed when penetrated, so that the exposure rate of the positive electrode current collector could not be sufficiently reduced.

It can be confirmed that all composite particles used as second particles in Examples 1 to 16 exhibited high effectiveness. The properties of these composite particles are not limited to the ranges confirmed in these Examples 1 to 16, for example, MS1 greater than or equal to $200 \times 10^{-6}$ mol/g and less than or equal to $2500 \times 10^{-6}$ mol/g, MS2 greater than or equal to $50 \times 10^{-6}$ mol/g mol/g and less than or equal to $1000 \times 10^{-6}$ mol/g, and the ratio MS1/MS2 of the amount of desorbed gas greater than or equal to 0.5 and less than or equal to 10, and the same effect may be exhibited in the ranges described in each of the above-described example embodiments.

In addition, according to Examples 1 to 16, not only was it possible to reduce or suppress internal short circuits that occur when nailing a battery, and sufficiently reduce or suppress an increase in the internal temperature of the battery, but it is also possible to reduce or suppress deterioration of battery performance such as cycle characteristics.

When a person having an ordinary skill in the technical field to which the present disclosure belongs, it is clear that various changes or modifications may be reached within the scope of the technical idea described in the claims and it is understood that these changes are within the technical scope of the present disclosure.

**Description of symbols**

100    non-aqueous electrolyte rechargeable battery
1      positive electrode
11     positive electrode current collector
12     positive electrode mixture layer
13     intermediate layer
2      negative electrode
21     negative electrode current collector
22     negative electrode mixture layer
3      separator
4      non-aqueous electrolyte
5      container

**Claims**

1. A positive electrode (1) for a non-aqueous electrolyte rechargeable battery (100), the positive electrode (1) comprising:

   a positive electrode current collector (11),
   a positive electrode mixture layer (12), and
   an intermediate layer (13) between the positive electrode current collector (11) and the positive electrode mixture layer (12),
   wherein the intermediate layer (13) comprises first particles and second particles;
   the first particles comprise boron nitride and have insulating properties,
   the second particles comprise at least one of a metal hydroxide and a metal oxide and a flame retardant component,
   a ratio of a major axis to a minor axis of the first particles is greater than or equal to about 3.0 and less than or equal to about 30,
   a cumulative value 50% of the particle size distribution based on a volume of the first particles is greater than or equal to about 0.01 $\mu$m and less than or equal to about 8 $\mu$m, and
   a cumulative value 50% of the particle size distribution based on a volume of the second particles is greater than or equal to about 0.01 $\mu$m and less than or equal to about 8 $\mu$m.

2. The positive electrode (1) as claimed in claim 1, wherein the first particles comprise boron nitride.

3. The positive electrode (1) as claimed in claim 1 or 2, wherein:

   an amount of $P_2$ (MS1) desorbed from the second particles from $\geq$ 80 °C to $\leq$ 1400 °C is greater than or equal to about $200 \times 10^{-6}$ mol/g and less than or equal to about $2500 \times 10^{-6}$ mol/g,
   an amount of $H_2O$ (MS2) desorbed from the second particles from $\geq$ 80 °C to $\leq$ 200 °C is greater than or equal to about $50 \times 10^{-6}$ mol/g and less than or equal to about $1000 \times 10^{-6}$ mol/g, and
   a ratio MS1/MS2 of an amount of desorbed $P_2$ to an amount of desorbed $H_2O$ satisfies Formula (1):

$$0.5 \leq (MS1/MS2) \leq 10 \ldots (1).$$

4. The positive electrode (1) as claimed in any one of claims 1 to 3, wherein in the second particles, a surface or interior of at least one of the metal hydroxide and the metal oxide is modified with a flame retardant.

5. The positive electrode (1) as claimed in any one of claims 1 to 4, wherein the metal hydroxide comprises at least one of kaolinite, pseudo-boehmite, boehmite, and aluminum hydroxide.

6. The positive electrode (1) as claimed in any one of claims 1 to 5, wherein the metal oxide comprises activated alumina.

7. The positive electrode (1) as claimed in any one of claims 1 to 6, wherein in the second particles, a surface or interior of at least one of the metal hydroxide and the metal oxide is modified with a flame retardant and wherein the flame retardant comprises at least one of phosphoric acid, phosphoric acid ester, phosphonic acid, phosphonic acid ester, phosphinic acid, and phosphinic acid ester.

8. The positive electrode (1) as claimed in any one of claims 1 to 7, wherein
a thickness of the intermediate layer (13) is greater than or equal to about 0.1 $\mu$m and less than or equal to about 10 $\mu$m.

9. The positive electrode (1) as claimed in any one of claims 1 to 8, wherein the intermediate layer (13) further comprises a conductive agent.

10. The positive electrode (1) as claimed in any one of claims 1 to 9, wherein the intermediate layer (13) further comprises a conductive agent and wherein the conductive agent comprises at least one of carbon nanofibers and carbon black.

11. A non-aqueous electrolyte rechargeable battery (100), comprising:

a positive electrode (1),
a negative electrode (2),
a separator (3), and
a non-aqueous electrolyte solution (4),
wherein the positive electrode (1) is the positive electrode (1) for the non-aqueous electrolyte rechargeable battery (100) as claimed in any one of claims 1 to 10.

# FIG. 1

# FIG. 2

------- Alumina + Electrolyte solution (Comparative Examples 4 to 6)

——— Composite particle A + Electrolyte solution (Examples 1 to 4)

EP 4 700 840 A1

Europäisches
Patentamt
European
Patent Office
Office européen
des brevets

## EUROPEAN SEARCH REPORT

**Application Number**

EP 25 19 7498

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 404 309 A1 (SAMSUNG SDI CO LTD [KR]) 24 July 2024 (2024-07-24) * paragraphs [0088], [0128]; claims 1-14; figure 1; table 1 * | 1-11 | INV. H01M4/13 H01M4/131 H01M4/62 H01M10/42 |
| A | CN 113 394 406 A (HUIZHOU LIWEI ELECTRONIC TECH CO LTD) 14 September 2021 (2021-09-14) * claims 1-10; figures 1-3 * | 1-11 | ADD. H01M4/02 |
| A | JP 2005 011540 A (TOSHIBA CORP) 13 January 2005 (2005-01-13) * claims 1-4; figure 2 * | 1-11 | |
| A | CN 115 377 347 A (HUIZHOU LIWEI ELECTRONIC TECH CO LTD) 22 November 2022 (2022-11-22) * claims 1-10; figure 1 * | 1-11 | |

**TECHNICAL FIELDS SEARCHED (IPC)**

H01M

The present search report has been drawn up for all claims

| Place of search | Date of completion of the search | Examiner |
|---|---|---|
| Munich | 9 January 2026 | Schmidtbauer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 7498

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2026

| Patent document cited in search report | | Publication date | Patent family member(s) | | Publication date |
|---|---|---|---|---|---|
| EP 4404309 | A1 | 24-07-2024 | EP | 4404309 A1 | 24-07-2024 |
| | | | JP | 2024101616 A | 30-07-2024 |
| | | | KR | 20240115198 A | 25-07-2024 |
| | | | US | 2024243296 A1 | 18-07-2024 |
| CN 113394406 | A | 14-09-2021 | NONE | | |
| JP 2005011540 | A | 13-01-2005 | NONE | | |
| CN 115377347 | A | 22-11-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020087647 A